# EUROPEAN PATENT APPLICATION

(11) **EP 3 896 673 A1**
(43) Date of publication of application: **20.10.2021**
(21) Application number: 21167028.6
(22) Date of filing: 06.04.2021
(51) Int. Cl.: G08G 5/00

(54) **SYSTEMS AND METHODS FOR ONBOARD STORAGE OF AVIONICS DATA**

(30) Priority: 14.04.2020 US 202016847914
(71) Applicant: Honeywell International Inc., Charlotte, NC 28202 (US)
(72) Inventor: TOEWS, PHILIP J., Charlotte, NC 28202 (US)
(74) Representative: LKGlobal UK Ltd.

(57) **Abstract**

Systems and methods are provided for collecting and storing flight data onboard an aircraft. The system includes a flight management system (FMS) located onboard the aircraft that collects flight data from the aircraft in real time. A data lake located on board the aircraft receives the flight data from the FMS and stores the flight data in an unstructured format. A user accesses the flight data through a data server that accesses the data lake.

## Description

### TECHNICAL FIELD

The present invention generally relates to avionics systems, and more particularly relates to systems and methods for onboard storage of avionics data.

### BACKGROUND

Current avionics systems produce large amounts of real time data. As connectivity is being more ubiquitous across the avionics realm, the concept providing this onboard data to offboard devices must being addressed through data client service architectures. However, it may not be feasible to dynamically provide all onboard collected data in real time to offboard devices. Hence, a need exists for onboard data to be collected and stored to then be efficiently accessed and output to clients upon request.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A system is provided for collecting and storing flight data onboard an aircraft. The system comprises: a flight management system (FMS) located onboard the aircraft that collects flight data from the aircraft in real time; a data lake located on board the aircraft that receives the flight data from the FMS and stores the flight data in an unstructured format; and a data server that accesses the data lake for a user of the flight data.

A method is provided for collecting and storing flight data onboard an aircraft. The method comprises: collecting flight data from the aircraft in real time with a flight management system (FMS) located onboard the aircraft; storing the flight data received from the FMS in a data lake located on board the aircraft, where the flight data is stored in the data lake in an unstructured format; and accessing the flight data stored in data lake for a user through a data server connected to the data lake.

Furthermore, other desirable features and characteristics of the method and system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 shows a diagram of an in-flight aircraft that contains an onboard FMS along with a data storage system in accordance with one embodiment;
FIG.2 shows a diagram of an aircraft system that includes a flight management computing module in accordance with one embodiment;
FIG.3 shows a block diagram of a system for storing real time avionics data from an FMS in a data lake in accordance with one embodiment;
FIG.4 shows a block diagram of an alternative system for storing real time avionics data from an FMS in a data lake in accordance with one embodiment;
FIG. 5 shows a diagram of an in-flight aircraft that contains an onboard data lake along with a cloud-based data server in accordance with one embodiment;
FIG. 6 shows a diagram of an in-flight aircraft that contains an onboard data lake along with a ground-based data server in accordance with one embodiment; and
FIG. 7 shows a flowchart of a method of collecting and storing in-flight data with an FMS and storing the data in an onboard data lake.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Systems and methods are have been developed for collecting and storing flight data onboard an aircraft. The system includes a flight management system (FMS) located onboard the aircraft that collects flight data from the aircraft in real time. A data lake located on board the aircraft receives the flight data from the FMS and stores the flight data in an unstructured format. A user accesses the flight data through a data server that accesses the data lake.

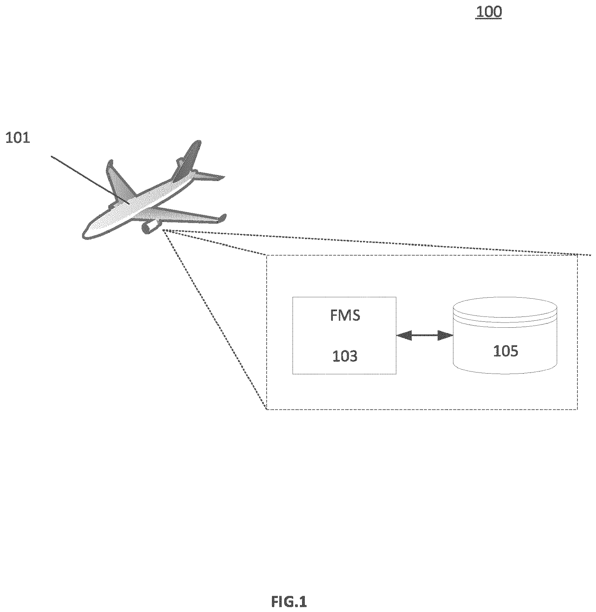

Turning now to FIG. 1, a diagram 100 is shown of an in-flight aircraft 101 that contains an onboard FMS 103 along with a data storage system 105 that is accessed by the FMS 103 in accordance with one embodiment. In alternative embodiments, the data storage system 105 may be integrated as part of the FMS 103. In still other embodiments, the data storage system 105 may be located off board the aircraft on the ground and connected to the FMS 103 via a communications data link. In some embodiments, the data storage system 105 may include a navigation database as well as performance characteristics database of the aircraft 101 for retrieval and use by the FMS 103.

The FMS, as is generally known, is a specialized computer that automates a variety of in-flight tasks such as in-flight management of the flight plan. Using various sensors such as global positioning system (GPS), the FMS determines the aircraft's position and guides the aircraft along its flight plan using its navigation database. From the cockpit, the FMS is normally controlled through a visual display device such as a control display unit (CDU) which incorporates a small screen, a keyboard or a touchscreen. The FMS displays the flight plan and other critical flight data to the aircrew during operation.

The FMS may have a built-in electronic memory system that contains a navigation database. The navigation database contains elements used for constructing a flight plan. In some embodiments, the navigation database may be separate from the FMS and located onboard the aircraft while in other embodiments the navigation database may be located on the ground and relevant data provided to the FMS via a communications link with a ground station. The navigation database used by the FMS may typically include: waypoints/intersections; airways; radio navigation aids/navigation beacons; airports; runway; standard instrument departure (SID) information; standard terminal arrival (STAR) information; holding patterns; and instrument approach procedures. Additionally, other waypoints may also be manually defined by pilots along the route.

The flight plan is generally determined on the ground before departure by either the pilot or a dispatcher for the owner of the aircraft. It may be manually entered into the FMS or selected from a library of common routes. In other embodiments the flight plan may be loaded via a communications data link from an airline dispatch center. During preflight planning, additional relevant aircraft performance data may be entered including information such as: gross aircraft weight; fuel weight and the center of gravity of the aircraft. The aircrew may use the FMS to modify the plight flight plan before takeoff or even while in flight for variety of reasons. Such changes may be entered via the CDU. Once in flight, the principal task of the FMS is to accurately monitor the aircraft's position. This may use a GPS, a VHF omnidirectional range (VOR) system, or other similar sensor in order to determine and validate the aircraft's exact position. The FMS constantly cross checks among various sensors to determine the aircraft's position with accuracy.

Additionally, the FMS may be used to perform advanced vertical navigation (VNAV) functions. The purpose of VNAV is to predict and optimize the vertical path of the aircraft. The FMS provides guidance that includes control of the pitch axis and of the throttle of the aircraft. In order to accomplish these tasks, the FMS has detailed flight and engine model data of the aircraft. Using this information, the FMS may build a predicted vertical descent path for the aircraft. A correct and accurate implementation of VNAV has significant advantages in fuel savings and on-time efficiency.

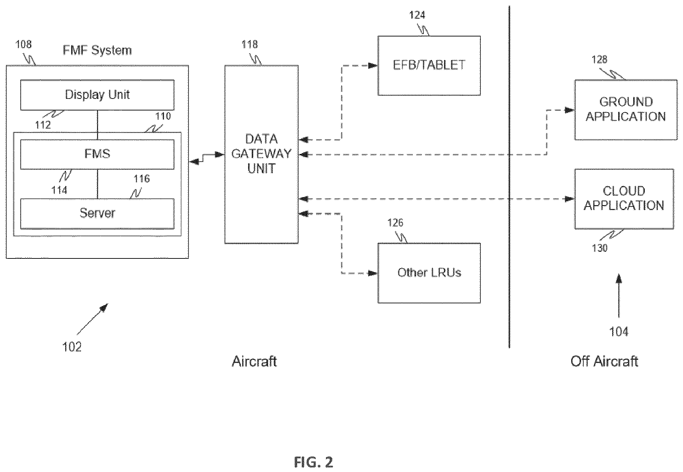

FIG. 2 depicts an exemplary embodiment of an aircraft system 102 suitable for implementation onboard an aircraft 101 shown previously in FIG. 1. The illustrated aircraft system 102 includes a flight management (FMF) module 108 communicatively coupled through a data gateway unit 118 to a plurality of onboard avionics line-replaceable units (LRUs) 126, one or more display units 112, and a multifunction computing modules 124 such as electronic flight bags (EFB) or portable tablets. The data gateway unit 118 is also communicatively coupled to ground applications 128 and cloud applications 130 that are located offboard the aircraft 104. It should be appreciated that FIG. 2 depicts a simplified representation of the aircraft system 102 for purposes of explanation, and FIG. 2 is not intended to limit the subject matter in any way.

In exemplary embodiments, an existing FMS 114 that is supported by a server 116, both of which are located onboard an aircraft, is utilized to communicate data between existing onboard avionics systems 124 or LRUs 126. In this regard, the FMS 114 is configured to receive operational or status data from one or more avionics systems 124 or LRUs 126 onboard the aircraft at corresponding avionics interfaces and convert one or more characteristics of the operational data to support communicating the operational data. For purposes of explanation, the subject matter may primarily be described herein in the context of converting operational data received from onboard avionics 124 or LRUs 126 in a first format (e.g., an avionics bus format) into another format supported by the data gateway unit 118, the subject matter described herein is not necessarily limited to format conversions or digital reformatting, and may be implemented in an equivalent manner for converting between other data characteristics, such as, for example, different data rates, throughputs or bandwidths, different sampling rates, different resolutions, different data compression ratios, and the like.

The flight management computing module 110 generally represents the FMS 114, the server 116 or other hardware, circuitry, logic, firmware and/or other components installed onboard the aircraft and configured to perform various tasks, functions and/or operations pertaining to flight management, flight planning, flight guidance, flight envelope protection, four-dimensional trajectory generation or required time of arrival (RTA) management, and the like. Accordingly, for purposes of explanation, but without limiting the functionality performed by or supported at the flight management computing module 108, the flight management computing module 108 may alternatively be referred to herein as the FMF system. The FMF system 108 includes a data gateway unit 118 configured to support communications with the avionics LRUs 126. In the illustrated embodiment, the FMF system 108 also includes a communications interface that supports coupling the display unit 112 to the FMS 114.

The FMF system 108 generally includes a processing system designed to perform flight management functions, and potentially other functions pertaining to flight planning, flight guidance, flight envelope protection, and the like. Depending on the embodiment, the processing system could be realized as or otherwise include one or more processors, controllers, application specific integrated circuits, programmable logic devices, discrete gate or transistor logics, discrete hardware components, or any combination thereof. The processing system of the FMF system 108 generally includes or otherwise accesses a data storage element (or memory), which may be realized as any sort of non-transitory short or long term storage media capable of storing programming instructions for execution by the processing system of the FMF system 108. In exemplary embodiments, the data storage element stores or otherwise maintains code or other computer-executable programming instructions that, when read and executed by the processing system of the FMF system 108, cause the FMF system 108 to implement, generate, or otherwise support a data concentrator application that performs certain tasks, operations, functions, and processes described herein.

The avionics LRUs 126 generally represent the electronic components or modules installed onboard the aircraft that support navigation, flight planning, and other aircraft control functions in a conventional manner and/or provide real-time data and/or information regarding the operational status of the aircraft to the FMF system 108. For example, practical embodiments of the aircraft system 102 will likely include one or more of the following avionics LRUs 126 suitably configured to support operation of the aircraft: a weather system, an air traffic management system, a radar system, a traffic avoidance system, an autopilot system, an autothrottle (or autothrust) system, a flight control system, hydraulics systems, pneumatics systems, environmental systems, electrical systems, engine systems, trim systems, lighting systems, crew alerting systems, electronic checklist systems, and/or another suitable avionics system.

In exemplary embodiments, the avionics interfaces are realized as different ports, terminals, channels, connectors, or the like associated with the FMF system 108 that are connected to different avionics LRUs 126 via different wiring, cabling, buses, or the like. In this regard, the interfaces may be configured to support different communications protocols or different data formats corresponding to the respective type of avionics LRU 126 that is connected to a particular interface. For example, the FMF system 108 may communicate navigation data from a navigation system via a data gateway unit 118 coupled to a data bus supporting the ARINC 424 (or A424) standard, the ARINC 629 (or A629) standard, the ARINC 422 (or A422) standard, or the like. As another example, a datalink system or other communications LRU 126 may utilize an ARINC 619 (or A619) compatible avionics bus interface for communicating datalink communications or other communications data with the FMF system 108.

The display unit(s) 112 generally represent the electronic displays installed onboard the aircraft in the cockpit, and depending on the embodiment, could be realized as one or more monitors, screens, liquid crystal displays (LCDs), a light emitting diode (LED) displays, or any other suitable electronic display(s) capable of graphically displaying data and/or information provided by the FMF system 108 via the display interface(s). Similar to the avionics interfaces, the display interfaces are realized as different ports, terminals, channels, connectors, or the like associated with the FMF system 108 that are connected to different cockpit displays via corresponding wiring, cabling, buses, or the like. In one or more embodiments, the display interfaces are configured to support communications in accordance with the ARINC 661 (or A661) standard. In one embodiment, the FMF system 108 communicates with a lateral map display unit 112 using the ARINC 702 (or A702) standard. The display units (s) 112 may be realized as any sort of monitor, screen, LCD, LED display, or other suitable electronic display capable of graphically displaying data and/or information under control of the processing system.

The processing system generally represents the hardware, circuitry, logic, firmware and/or other components configured to perform the various tasks, operations, functions and/or operations described herein. Depending on the embodiment, the processing system may be implemented or realized with a general purpose processor, a microprocessor, a controller, a microcontroller, a state machine, an application specific integrated circuit, a field programmable gate array, any suitable programmable logic device, discrete gate or transistor logic, discrete hardware components, or any combination thereof, designed to perform the functions described herein. Furthermore, the steps of a method or algorithm described in connection with the embodiments disclosed herein may be embodied directly in hardware, in firmware, in a software module executed by the processing system, or in any practical combination thereof. In this regard, the processing system includes or accesses a data storage element (or memory), which may be realized using any sort of non-transitory short or long term storage media, and which is capable of storing code or other programming instructions for execution by the processing system. In exemplary embodiments described herein, the code or other computer-executable programming instructions, when read and executed by the processing system, cause the processing system to implement with an FMS 114 (shown previously as 103 in FIG.1) additional tasks, operations, functions, and processes described herein.

The communications module generally represents the hardware, module, circuitry, software, firmware and/or combination thereof that is coupled between the processing system and a communications interface configured to support communications via an electrical connection. For example, in one embodiment, the communications module is realized as an Ethernet card or adapter configured to support communications via an Ethernet cable 229 provided between Ethernet ports. In other embodiments, the communications module is configured to support communications in accordance with the ARINC 429 (A429) standard via an A429 data bus provided between A429 ports of the respective modules. In yet other embodiments, the communications module is configured to support communications in accordance with the ARINC 422 (A422) standard via an A422 data bus provided between A422 ports of the respective modules. In yet other embodiments, the communications module is configured to support communications in accordance with the ARINC 739 (A739) standard via an A739 data bus provided between A739 ports of the respective modules.

In various embodiments, the FMF system 108 communicates using a different communications protocol or standard than one or more of the avionics LRUs 126 and/or the display devices 112. In such embodiments, to support communications of data with the those LRUs 126 and/or display devices 112, a data concentrator application converts data from one format to another before retransmitting or relaying that data to its destination. For example, the data concentrator application may convert data received from an avionics LRU 126 to the A429 or Ethernet format, and vice versa. Additionally, in exemplary embodiments, the FMF system 108 validates the data received from an avionics LRU 126 before transmitting the data. For example, the system may perform debouncing, filtering, and range checking, and/or the like prior to converting and retransmitting data from an avionics LRU 126.

It should be noted that although the subject matter may be described herein, in alternative embodiments, data sources could be realized as an electronic flight bag (EFB) 124 or other mobile or portable electronic device. In such embodiments, an EFB 124 capable of supporting an FMS 114 application may be connected to an FMF system 108 using an Ethernet cable 229 to support flight management functionality from the EFB 124 in an equivalent manner as described herein.

In one or more embodiments, the FMF system 108 stores or otherwise maintains programming instructions, code, or other data for programming the and transmits or otherwise provides the programming instructions to update or otherwise modify the FMS 114 to implement the data concentrator application 216. For example, in some embodiments, upon establishment of the connection to transmit or otherwise provide the programming instructions, which, in turn, executes the instructions to implement the data concentrator application. In some embodiments, the data concentrator application may be implemented in lieu of flight management functionality. In other embodiments, the FMF system 108 may support the data concentrator application in parallel with flight management functions. In this regard, the FMF system 108 may perform flight management functions, while the FMS 114 application supplements the flight management functions to provide upgraded flight management functionality within the aircraft system 102.

A "data lake" is a centralized storage repository that can store large amount of structured, semi-structured, and unstructured data. It is a place to store every type of data in its natural/raw or "unstructured" format with no fixed limits on account size or file structure. It offers high data quantity to increase analytic performance and native integration. A data lake has a flat architecture where every data element in the data lake is given a unique identifier and tagged with a set of metadata information.

A data lake is may be used as a single store of all enterprise data including raw copies of source system data and transformed data used for tasks such as reporting, visualization, advanced analytics and machine learning. It can include structured data from relational databases (rows and columns), semi-structured data (CSV, logs, XML, JSON), unstructured data (emails, documents, PDFs) and binary data (images, audio, video). The structure of the data or schema is not defined when data is captured. This means a user can store all data without careful design or the need to know what questions might need answers for in the future. Consequently, different types of analytics on data like SQL queries, big data analytics, full text search, real-time analytics, and machine learning can be used.

A data lake is characterized by three key attributes: **collect everything** including all data, both raw sources over extended periods of time as well as any processed data; **access anywhere** by enabling users across multiple business units to refine, explore and enrich data on their terms; and **flexible access** by enabling multiple data access patterns across a shared infrastructure including batch, interactive, online, search, in-memory and other processing engines. This process has the advantage of allowing the user to scale to data of any size, while saving time of defining data structures, schema, and transformations. It also allows users to access data with their choice of analytic tools and frameworks. This includes open source frameworks and commercial offerings from data warehouse and business intelligence vendors. Data lakes allow analytics to be run without the need to move the data to a separate analytics system and also give the ability to understand what data is in the lake through crawling, cataloging, and indexing of data. Finally, data must be secured to ensure data assets are protected.

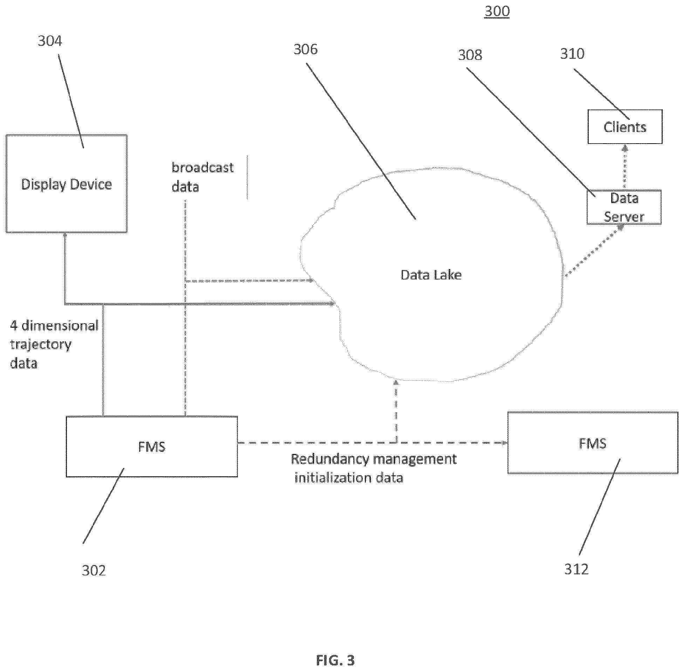

Functions within the avionics produce data and output on a data bus periodically through the operation of the aircraft. The scale of data being produced is very large. For example 1 GB (gigabytes) of data per minute is commonly produced. Present embodiments use a solution to populate a data lake located onboard the aircraft with this data. Turning now to FIG.3, a block diagram is shown of a system 300 for storing real time avionics data from an FMS 302 in a data lake 306 located onboard the aircraft in accordance with one embodiment.

The data lake 306 is populated by alternative methods other than saving the raw data. An FMS 302 system outputs multiple data objects that if viewed as a whole, provide reasonable coverage of the data needed to be stored in the data lake 306. One object is the flight plan defining data as can be captured from a digital twin FMS 312 used for redundancy management. The two FMS systems 302 and 312 transfer "synch" together and copy the data from box to box to as part of a redundancy management solution. This data is complete enough so that the twin FMS 312 can come online, consume the redundancy management transferred data, and take over control of the aircraft with little to no system impact. This redundancy management transferred data is stored into the data lake 306.

Another data object transmitted from the FMS 302 is predicted "four dimensional (4D) trajectory data". This data is transmitted in various formats to display devices 304 to support lateral maps, vertical maps, textual leg displays of the flight plan with predictions. etc. This 4D trajectory data is added to the data lake 306. The FMS also broadcasts data that is part of the data lake. This "broadcast data" includes such things as current aircraft position, distance to a waypoint along the flight plan, etc. An external client 310 could request data from the on-board data lake 306 through a data server 308 that accesses the data lake 306. The request could be processed in an unobtrusive manner to extract the needed data.

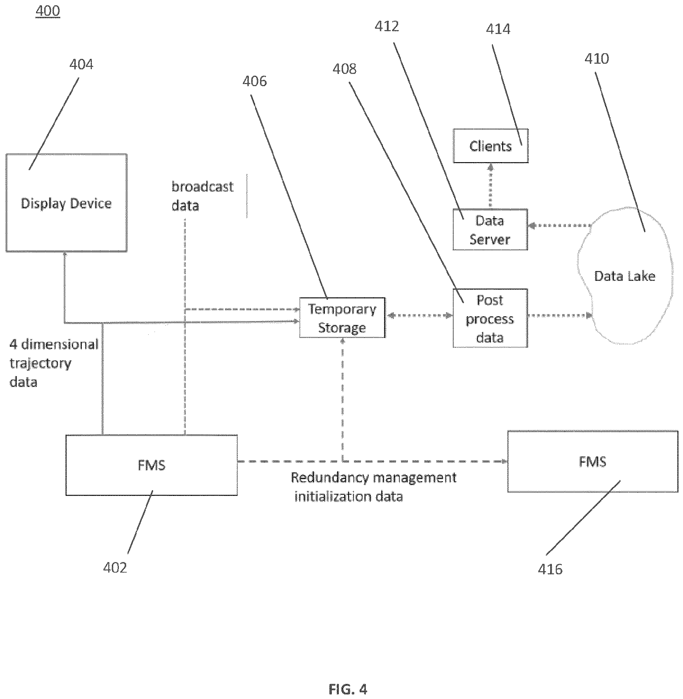

Turning now the FIG. 4, a block diagram is shown of an alternative system for storing real time avionics data from an FMS in a onboard data lake in accordance with one embodiment. The FMS 402, the display device 404 and the twin FMS 416 correspond the similar items shown and discussed previously in FIG. 3. In this embodiment, if a system lacks sufficient data storage capacity, large data objects will be stored to an intermediate memory location 406 for temporary storage. Then a dedicated post process function 408 will compare old and new data and only save the changed data to the data lake 110. Consequently, the data that doesn't change or changes very little is ignored and not saved, while significant changes are stored. The resulting data lake 410 is smaller and provides easy to access data changes to satisfy client 414 requests for data from a data server 412 that accesses the data lake 410.

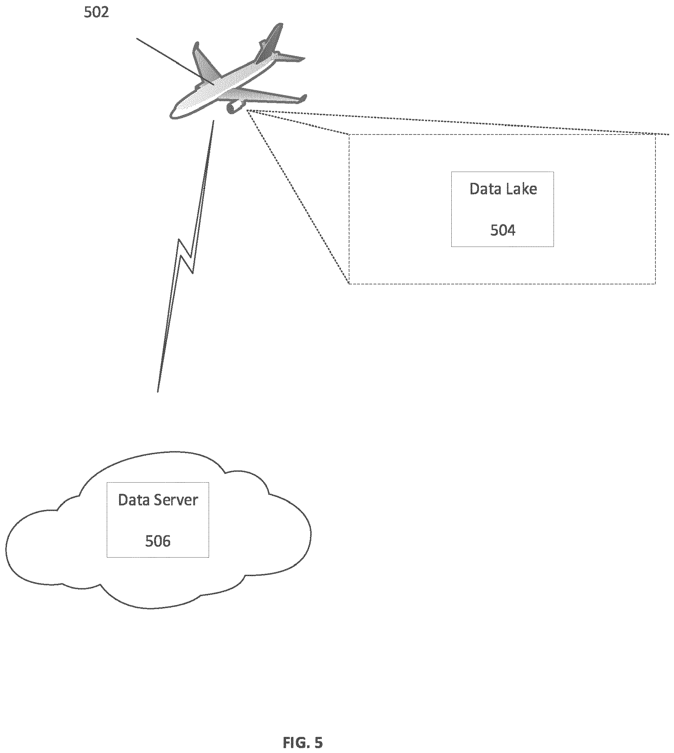

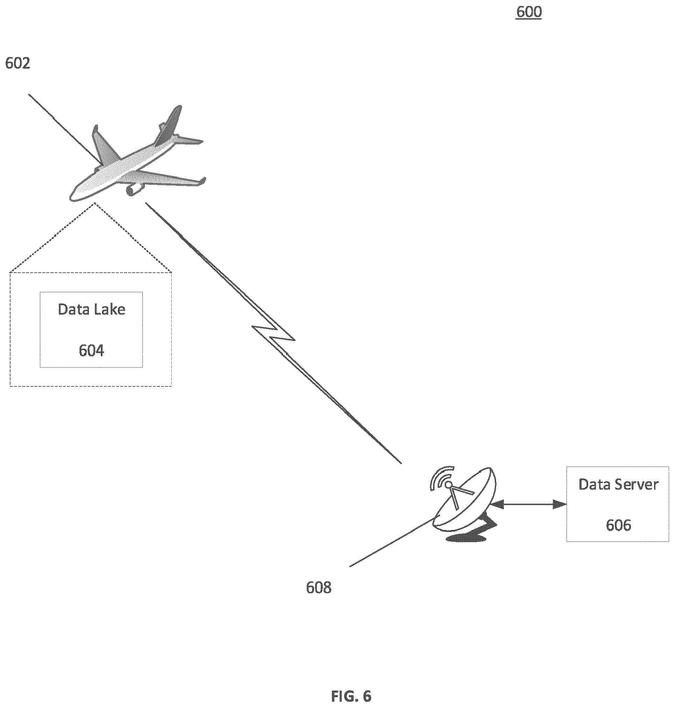

In some embodiments, the data server 308 and 412 as shown in FIGS. 3 and 4 respectively, may be cloud-based or ground-based. FIG. 5 shows a diagram 500 of an in-flight aircraft 502 that contains an onboard data lake 504 along with a cloud-based data server 506 that is accessed directly by the aircraft via a data communications link. FIG. 6 shows a diagram 600 of an in-flight aircraft 602 that contains an onboard data lake 604 along with a ground-based data server 606 that is accessed through a ground communication receiving station 608.

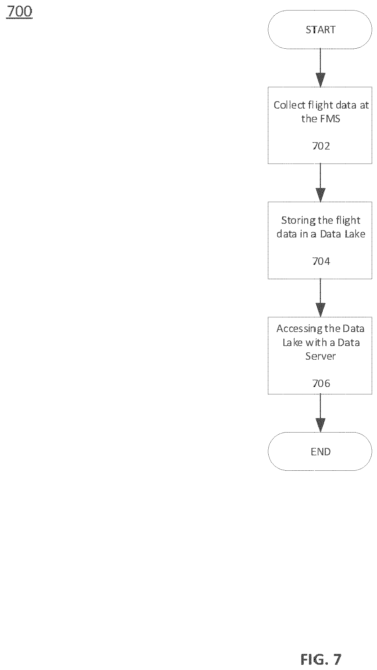

Turning now to FIG. 7, a flowchart 700 is shown of a method of collecting and storing in-flight data with an FMS and storing the data in an onboard data lake. First, the flight data is collected 702 from the aircraft in real time with the FMS located onboard the aircraft. The flight data received from the FMS is then stored in an unstructured format in the data lake 704 located on board the aircraft. The flight data stored in data lake is later accessed by a user through a data server connected to the data lake 706.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

The following description refers to elements or nodes or features being "connected" or "coupled" together. As used herein, unless expressly stated otherwise, "coupled" means that one element/node/feature is directly or indirectly joined to (or directly or indirectly communicates with) another element/node/feature, and not necessarily mechanically. Likewise, unless expressly stated otherwise, "connected" means that one element/node/feature is directly joined to (or directly communicates with) another element/node/feature, and not necessarily mechanically. Thus, additional intervening elements, devices, features, or components may be present in an embodiment of the depicted subject matter.

In addition, certain terminology may also be used in the following description for the purpose of reference only, and thus are not intended to be limiting. For example, terms such as "upper", "lower", "above", and "below" refer to directions in the drawings to which reference is made. Terms such as "front", "back", "rear", "side", "outboard", and "inboard" describe the orientation and/or location of portions of the component within a consistent but arbitrary frame of reference which is made clear by reference to the text and the associated drawings describing the component under discussion. Such terminology may include the words specifically mentioned above, derivatives thereof, and words of similar import. Similarly, the terms "first", "second", and other such numerical terms referring to structures do not imply a sequence or order unless clearly indicated by the context.

For the sake of brevity, conventional techniques related to signal processing, data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A system for collecting and storing flight data onboard an aircraft, comprising:
a flight management system (FMS) located onboard the aircraft that collects flight data from the aircraft in real time;
a data lake located on board the aircraft that receives the flight data from the FMS and stores the flight data in an unstructured format; and
a data server that accesses the data lake for a user of the flight data.

2. The system of Claim 1, where the flight data collected by the FMS is from a display device located onboard the aircraft.

3. The system of Claim 2, where the flight data from the display device comprises four dimensional (4D) trajectory data for the aircraft.

4. The system of Claim 3, where the 4D trajectory data for the aircraft supports lateral maps of a flight plan.

5. The system of Claim 3, where the 4D trajectory data for the aircraft supports vertical maps of a flight plan.

6. The system of Claim 3, where the 4D trajectory data for the aircraft supports textual leg displays of a flight plan.

7. The system of Claim 1, where the flight data collected by the FMS is from a broadcast data sent by the FMS.

8. The system of Claim 7, where the broadcast data comprises a current aircraft position.

9. The system of Claim 7, where the broadcast data comprises a distance to a waypoint on the flight plan.

10. The system of Claim 1, further comprising:
a digital twin FMS located onboard the aircraft that provides redundancy by synching with the FMS, where flight plan defining data for the aircraft is collected by the FMS as flight data during the synching.

11. The system of Claim 1, further comprising:
an intermediate memory storage located onboard the aircraft, where the intermediate memory storage temporarily stores the data prior to storage in the data lake while the new flight data and previous flight data is compare so that only flight data that has changed is stored in the data lake.
